# EUROPÄISCHE PATENTSCHRIFT

(11) **EP 1 275 208 B1**
(45) Veröffentlichungstag und Bekanntmachung des Hinweises auf die Patenterteilung: **06.10.2004**
(21) Anmeldenummer: 01942959.6
(22) Anmeldetag: 18.04.2001
(51) Int. Cl.: H04B 5/00, G08C 17/04, G08C 17/06, H01F 38/14

(54) **ANORDNUNG ZUR KONTAKTLOSEN ÜBERTRAGUNG ELEKTRISCHER SIGNALE BZW. ENERGIE**
ARRANGEMENT FOR CONTACTLESS TRANSMISSION OF ELECTRICAL SIGNALS OR ENERGY
DISPOSITIF DE TRANSMISSION SANS CONTACT DE SIGNAUX ELECTRIQUES OU D'ENERGIE ELECTRIQUE

(30) Priorität: 18.04.2000 DE 10019371; 26.05.2000 DE 10026175
(43) Veröffentlichungstag der Anmeldung: 15.01.2003
(73) Patentinhaber: Schleifring und Apparatebau GmbH, 82256 Fürstenfeldbruck (DE)
(72) Erfinder: LOHR, Georg, 82223 Eichenau (DE); WEITHMANN, Herbert, 80999 München (DE); SCHILLING, Harry, 91166 Georgensgmünd (DE)
(74) Vertreter: Lohr, Georg, Dr.
(86) Internationale Anmeldenummer: PCT/DE2001/001497
(87) Internationale Veröffentlichungsnummer: WO 2001/080442

(56) Entgegenhaltungen:
- WO-A-98/29919
- DE-A- 4 125 145
- DE-A- 4 130 903
- DE-A- 19 701 357
- DE-C- 19 705 301
- US-A- 5 451 763
- TIETZE U, SCHENK CH: "Halbleiter-Schaltungstechnik" 1993 , SPRINGER-VERLAG , BERLIN XP002176894 Seite 535 -Seite 550 Seite 880 -Seite 885

## Beschreibung

### Technisches Gebiet

Die Erfindung bezieht sich auf eine Anordnung zur kontaktlosen Übertragung elektrischer Signale bzw. Energie.

### Stand der Technik

Zur Kontaktierung ortsveränderlicher Einrichtungen werden oft mechanische Steckverbindungen eingesetzt. Derartige mechanische Kontaktsysteme sind in einer breiten Typenvielfalt auf dem Markt. Regelmäßig muß ein relativ hoher Aufwand betrieben werden, um die Kontaktsysteme vor Umwelteinflüssen zu schützen. Hier stellen Aspekte wie Berührungsschutz, Schutz vor eindringenden Flüssigkeiten, wie Wasser, Öl oder auch Feuchtigkeit eine wichtige Rolle. Besondere Anforderungen werden in explosionsgeschützten Bereichen gestellt. Um solchen Anforderungen gerecht zu werden, müssen die Kontakteinrichtungen in aufwendiger und kostenintensiver Weise gekapselt werden. Dadurch vergrößert sich die Bauform wesentlich und die Handhabung wird erschwert. Gerade bei häufigen Steckzyklen weisen solche Steckverbinder gravierende Nachteile auf. Hinzu kommt noch ein mechanischer Verschleiß der Kontakte, der sich zunächst in einem höheren Übergangswiderstand bis hin zum Totalausfall äussert.

Eine wesentliche Verbesserung stellen hier kontaktlose Verbindungssysteme dar. Kontaktlose auf induktiver Koppelung basierende Übertragungssysteme sind in vielfältigen Ausführungen bekannt. Beispielhaft in der DE 197 01 357 Al ist ein auf induktiver Koppelung basierendes System beschrieben. Es vermeidet den Hauptnachteil kontaktierender Systeme, hat jedoch relativ hohe Herstellungskosten. Hier ist für jede Übertragungseinrichtung ein eigener Wechselspannungsgenerator und auf der entgegengesetzten Seite ein entsprechender Gleichrichter notwendig. Gerade bei Anlagen mit einer hohen Anzahl von Kontakteinrichtungen führt dies zu sehr hohen Kosten.

Ein weiterer Nachteil derartiger Anordnungen, wie sie beispielsweise in der DE 41 25 145 Al beschrieben ist, ist die Forderung nach einer relativ festen Kopplung mit niedriger Streuinduktivität zwischen den beiden Kontaktpartnern. Gerade bei konventionellen Schaltungsanordnungen zur induktiven Übertragung stellt sich die Streuinduktivität, welche auch im Ersatzschaltbild als Serieninduktivität dargestellt werden kann, als störend heraus, da ihre Impedanz den maximal übertragbaren Strom begrenzt. Ein streuinduktivitätsarmer Aufbau setzt aber einen möglichst geringen Luftspalt zwischen den Übertragungselementen voraus. Dies bedeutet meist einen hohen mechanischen Aufwand und geringe Flexibilität beim Einsatz.

### Darstellung der Erfindung

Der Erfindung liegt die Aufgabe zugrunde, eine Anordnung zur kontaktlosen Übertragung anzugeben, welche insbesondere bei einer großen Anzahl von Übertragungsstellen kostengünstig realisierbar ist, wobei gleichzeitig ein größerer Luftspalt zwischen den Übertragungspartnern tolerierbar sein soll.

Eine erfindungsgemäße Lösung dieser Aufgabe ist im Patentanspruch 1 angegeben. Weiterbildungen der Erfindung sind Gegenstand der abhängigen Ansprüche.

In dieser Darstellung wird für das magnetische Medium gleichbedeutend der Begriff Kern, Ferritkern oder auch Eisenkern gebraucht. Dieser bezeichnet im allgemeinsten Fall ein magnetisches Medium mit µᵣ >1. Ebenso wird nicht ausdrücklich zwischen Signal- und Energieübertragung unterschieden, da ohne Energie kein Signal übertragen werden kann und übertragene Energie auch Information enthalten kann.

Diese erfindungsgemäße Anordnung besteht aus mehreren Resonanzübertragern, basierend auf induktiver Kopplung. Dazu werden die einzelnen induktiven Übertrager zu resonanzfähigen Elementen ergänzt. Dies kann eine einzelne Kapazität für alle Induktivitäten oder auch eine Anordnung, bei der jeder einzelnen Induktivität bzw, einer Gruppe von Induktivitäten jeweils eine Kapazität zugeordnet ist. Diese werden dann vorzugsweise von einer gemeinsamen Speisevorrichtung gespeist. Diese Speisevorrichtung enthält eine Vorrichtung, welche die Wechselspannungs- bzw. Stromquelle derart ansteuert, dass diese auf einer Resonanzfrequenz der Übertragungsanordnung arbeitet.

Eine weitere vorteilhafte Ausgestaltung der Erfindung besteht darin, dass die parasitären Kapazitäten der induktiven Koppelelemente derart ausgestaltet sind, dass sie einen nennenswerten Anteil zur Resonanzkapazität beitragen. Im Extremfall sind diese parasitären Kapazitäten so hoch, dass auf Resonanzkapazitäten vollständig verzichtet werden kann. Hierzu läßt sich die ohnehin vorhandene Wicklungskapazität vorteilhaft ausnutzen.

In einer weiteren vorteilhaften Ausgestaltung der Erfindung werden die induktiven Koppelelemente durch entsprechende Kapazitäten zu Serienresonanzkreisen ergänzt. Diese Ausgestaltung der Serienresonanzkreise kann wahlweise auf der Primär- oder Sekundärseite bzw. auf beiden Seiten des induktiven Koppelelements erfolgen. Neben einer Serienresonanz der Schaltung ergibt sich meist mindestens eine weitere Parallelresonanz. Wesentlich ist bei dieser Anordnung aber, dass die Speisevorrichtung derart gestaltet ist, dass eine Speisung in der Nähe der Serienresonanzfrequenz erfolgt.

Eine andere Ausgestaltung der Erfindung besteht darin, dass die induktiven Übertragungselemente durch entsprechend parallel geschaltete Kapazitäten zu Parallelresonanzkreisen ergänzt werden. Diese Ergänzung kann jeweils wahlweise auf primär, sekundär oder auch auf beiden Seiten der induktiven Koppelelemente erfolgen. Neben einer Parallelresonanz der Schaltung ergibt sich meist mindestens eine weitere Serienresonanz. Wesentlich ist bei dieser Anordnung aber, dass die Speisevorrichtung derart gestaltet ist, dass eine Speisung in der Nähe der Parallelresonanzfrequenz erfolgt.

In einer weiteren vorteilhaften Ausgestaltung der Erfindung sind zusätzliche kapazitive Koppelelemente zur Übertragung weiterer Informationen vorgesehen.

In einer weiteren Ausgestaltung der Erfindung wird ein noch nicht zur Energieübertragung verwendeter magnetischer Pfad des induktiven Koppelementes zur Übertragung weiterer Informationen verwendet. Dies kann beispielsweise die äußere Fläche des Kerns sein, wobei dann der magnetische Fluß weiter über die Umgebung des Kernes durch Luft erfolgt. Im Falle eines mehrschenkligen Kernes kann der magnetische Fluß über die beiden äußeren Schenkel oder weitere erfolgen.

In einer anderen Ausgestaltung der Erfindung ist eine Modulations- bzw. Demodulationseinheit zur Übertragung weiterer Informationen vorgesehen in welchem die Informationen mittels einer Trägerfrequenz moduliert bzw. demoduliert werden, die hinreichend von den Frequenzen der Speisevorrichtung hinreichend weit entfernt ist. Eine solche Übertragung weiterer Informationen in einem anderen Frequenzband als das zur Energieübertragung verwendete Frequenzband ist hier problemlos möglich, da die Energie durch die Resonanzkreise nur schmalbandig übertragen wird. Damit kann durch das selbe Koppelelement im selben magnetischen Pfad wie die Energieübertragung eine Informationsübertragung erfolgen. Aber auch im Falle einer Übertragung mittels kapazitiver Koppelflächen als auch bei der Übertragung durch einen anderen magnetischen Pfad schafft diese Anordnung einen vergrößerten Störabstand.

Eine andere Ausgestaltung der Erfindung besteht darin, dass diese kapazitiven Koppelelemente im unmittelbaren Koppelbereich der induktiven Koppelelemente angeordnet sind. Durch eine solche Anordnung ist ein sehr platzsparender Aufbau möglich, da für die kapazitive Koppeleinrichtung kein zusätzlicher Platz benötigt wird. Eine solche Anordnung der kapazitiven Koppelelemente im magnetischen Feld der induktiven Übertragungseinrichtung ermöglicht eine unabhängige Übertragung beider Signale. Dies ist in der erfindungsgemäßen Anordnung problemlos möglich, da sich elektrische und magnetischen Felder gegenseitig nicht beeinflussen. Wird in einer weiteren vorteilhaften Ausgestaltung der Erfindung die kapazitive Koppeleinrichtung hier als Leiterplatte ausgeführt, so bietet sie einen zusätzlichen mechanischen Schutz der induktiven Koppeleinrichtung. Im Gegensatz zu der in der deutschen Offenlegungsschrift DE 4125145 dargestellten Anordnung, stellt die erfindungsgemäße Anordnung eine vollständige Abdeckung des induktiven Koppelelements dar.

In einer weiteren vorteilhaften Ausgestaltung der Erfindung ist das Steuerelement derart gestaltet, dass es zusammen mit der Wechselspannungs- bzw. Stromquelle und den Resonanzkreisen einen selbstschwingenden Leistungsoszillator ergibt. Das Prinzip einer solchen Anordnung ist in der deutschen Offenlegungsschrift DE 197 01357 beschrieben.

In einer anderen Ausgestaltung gibt das Steuerelement eine feste Frequenz für die Wechselspannungs- bzw. Stromquelle vor.

In einer weiteren vorteilhaften Ausgestaltung der Erfindung ist auf der Empfängerseite bei zumindest einem Empfänger eine Schaltung, bestehend aus einem Gleichrichter mit nachgeschaltetem Linearregler vorgesehen. Damit kann die Welligkeit der übertragenen Spannung reduziert und diese auf einen konstanten Wert geregelt werden.

In einer weiteren vorteilhaften Ausgestaltung der Erfindung ist ein Synchrongleichrichter eingesetzt, welcher durch einen entsprechenden Phasencontroler gesteuert wird. Derartige Synchrongleichrichter haben den Vorteil, dass sie mit aktiven geschalteten Elementen wesentlich niedrigere Verluste erreichen als passive Gleichrichter.

In einer weiteren vorteilhaften Ausgestaltung der Erfindung ist bei mindestens einem Empfänger ein Synchrongleichrichter mit einer Phasensteuerung vorgesehen, welcher mit Hilfe des Phasencontrolers den Leistungsfluss aus der sekundärseitigen Schaltung steuert.

In einer weiteren vorteilhaften Ausgestaltung der Erfindung ist bei mindestens einem Empfänger ein Gleichrichter mit nachgeschaltetem Schaltregler zum besonders verlustarmen Umsetzen der Ausgangsspannung in andere Werte vorgesehen.

### Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Es zeigen:
- Fig. 1: Beispielhaftes Schaltbild einer erfindungsgemäßen Anordnung mit Parallelresonanzkreisen
- Fig. 2: Schematischer mechanischer Aufbau einer erfindungsgemäßen Anordnung
- Fig. 3: Aufbau einer kombinierten Anordnung mit induktiver und kapazitiver Übertragung
- Fig. 4: Beispielhafte Anordnung mit Serienresonanzkreisen
- Fig. 5: zeigt eine bespielhafte Anordnung mit einem Gleichrichter und nachgeschaltetem Linearregler
- Fig. 6: zeigt beispielhaft eine Anordnung mit einem Synchrongleichrichter
- Fig. 7: zeigt eine beispielhafte Anordnung eines Gleichrichters mit nachgeschaltetem Schaltregler.
- Fig. 8: zeigt eine beispielhafte Anordnung mit zusätzlicher Signalübertragung im Falle eines geschlossenen Eisen- bzw. Ferritkernes
- Fig. 9: zeigt eine beispielhafte Anordnung mit zusätzlicher Signalübertragung im Falle eines mehrschenkligen Eisen- bzw. Ferritkernes.

### Darstellung von Ausführungsbeispielen

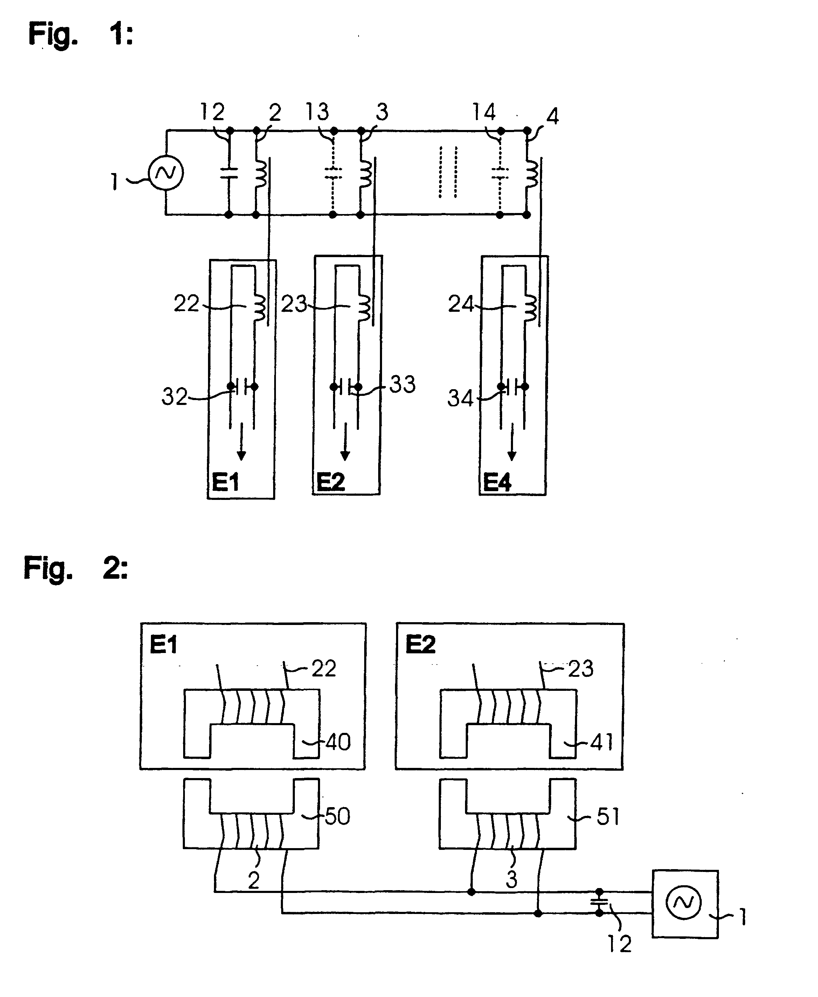

In Fig. 1 ist beispielhaft eine erfindungsgemäße Anordnung dargestellt. Im Sender speist eine Wechselspannungsquelle mit einem integrierten Steuerelement (1) die induktiven Koppelelemente, welche jeweils aus einer Primärwicklung (2, 3, 4) und einer Sekundärwicklung (22, 23, 24) bestehen. Dabei sind mehrere Primärwicklungen an jeweils einen Sender gekoppelt und die Sekundärwicklungen eigenständigen mit den Sendern im losen mechanischen Kontakt stehenden Empfängern zugeordnet. Um eine parallelresonanzfähige Schaltung zu erhalten, wird die Induktivität wahlweise auf der Primärwicklung und/oder auf der Sekundärwicklung zu einem Parallelresonanzkreis mit entsprechenden Kapazitäten ergänzt. Die Kapazitäten auf der Primärseite (12, 13, 14) sind dem Sender zugeordnet, während die sekundärseitigen Kapazitäten (32, 33, 34) jeweils einem Empfänger zugeordnet sind.

Fig. 2 zeigt beispielhaft schematisch einen mechanischen Aufbau einer erfindungsgemäßen Anordnung. Hierin ist erkennbar, wie die einzelnen Empfänger den entsprechenden Positionen des Senders zugeordnet sind, so dass eine magnetische Kopplung der primärseitigen Induktivitäten, bestehend aus einem Ferrit- oder Eisenkern (50, 51) sowie den zugehörigen Primärwicklungen (2, 3) und den mit diesen korrespondierenden sekundären Induktivitäten, bestehend aus den Ferrit- oder Eisenkernen (40, 41) und den zugehörigen Wicklungen (22, 23).

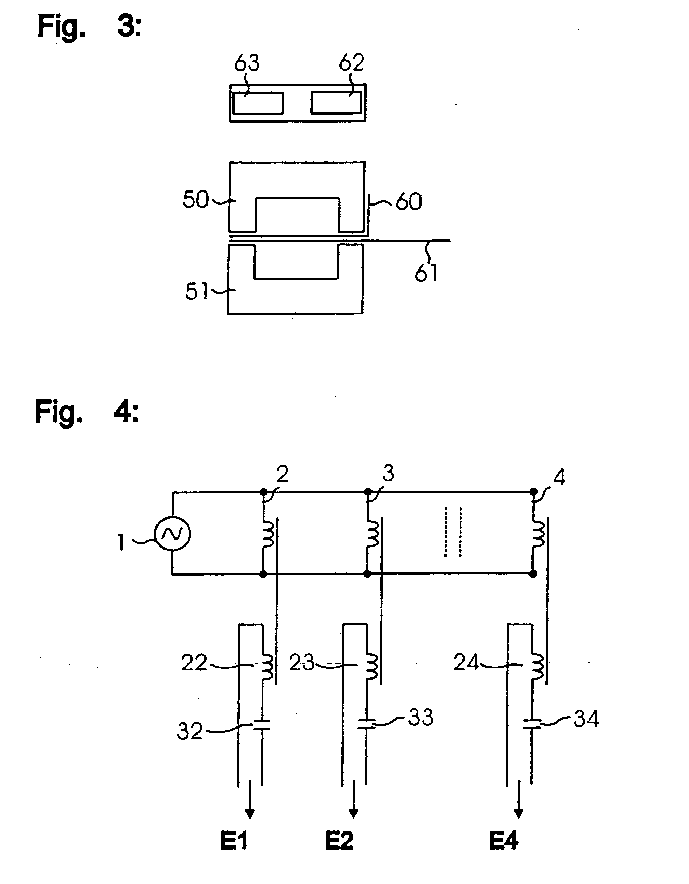

Fig. 3 zeigt den Aufbau einer kombinierten Anordnung mit induktiver und kapazitiver Übertragung. Hierbei korrespondieren der primärseitige Ferritkern (51) mit dem sekundärseitigen Ferritkern (50). Zwischen den beiden Kernhälften ist auf jeder Seite eine Leiterplatte, welche Leiterstrukturen zur kapazitiven Signalübertragung enthält, angeordnet. Diese Leiterplatten befinden sich im geringen Abstand zueinander, so dass durch die entstehende hohe Kapazität zwischen der Sender- und Empfängerseite elektrische Signale übertragen werden können. Beispielhaft ist hier eine Anordnung aus zwei Leiterflächen (61, 62) in der Draufsicht dargestellt.

Fig. 4 zeigt eine beispielhafte Anordnung mit Serienresonanzkreisen. Im Sender speist eine Wechselspannungsquelle mit einem integrierten Steuerelement (1) die induktiven Koppelelemente, welche jeweils aus einer Primärwicklung (2, 3, 4) und einer Sekundärwicklung (22, 23, 24) bestehen. Dabei sind mehrere Primärwicklungen an jeweils einen Sender gekoppelt und die Sekundärwicklungen eigenständigen mit den Sendern im losen mechanischen Kontakt stehenden Empfängern zugeordnet. Um eine parallelresonanzfähige Schaltung zu erhalten, wird die Induktivität wahlweise auf der Primärwicklung und/oder auf der Sekundärwicklung zu einem Parallelresonanzkreis mit entsprechenden Kapazitäten ergänzt. Die Kapazitäten auf der Primärseite (12, 13, 14) sind dem Sender zugeordnet, während die sekundärseitigen Kapazitäten (32, 33, 34) jeweils einem Empfänger zugeordnet sind.

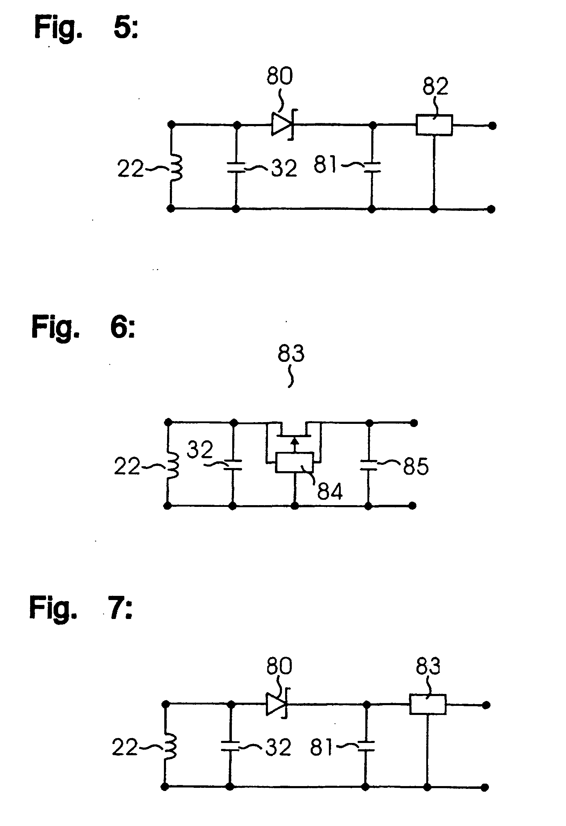

Fig. 5 zeigt eine typische Anordnung einer sekundärseitigen Beschaltung entsprechend der Erfindung. Hier dient die Sekundärwicklung (22) zur Auskoppelung der elektrischen Signale. Die entsprechende Parallelresonanzkapazität, wie hier beispielsweise im Falle einer Parallelresonanz dargestellt, ist durch den Kondensator (32) realisiert. Das am Parallelresonanzkreis anliegende Signal wird mittels einer Diode (80) gleichgerichtet und in dem Kondensator (81) gesiebt. Ein nachfolgender Linearregler (82) übernimmt die Regelung der Ausgangsspannung.

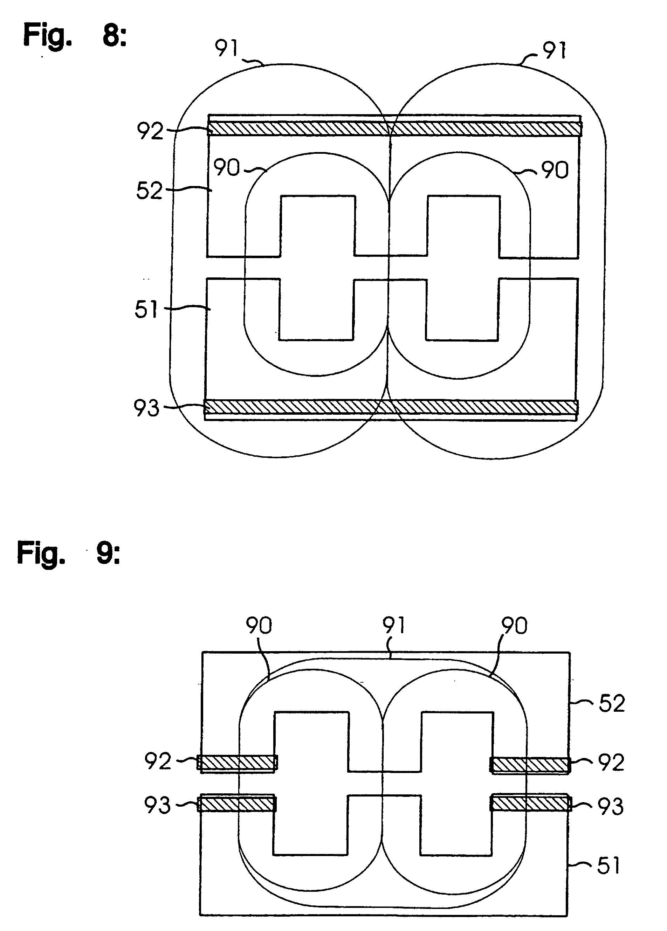

Fig. 6 zeigt beispielhaft eine entsprechende Schaltung einer Sekundärseite im Falle einer Parallelresonanz mit einem Synchrongleichrichter. Das Signal wird über die sekundärseitige Induktivität (22) ausgekoppelt. Diese erzeugt zusammen mit der Parallelkapazität (32) einen Parallelresonanzkreis. In diesem Fall besteht beispielsweise der Synchrongleichrichter aus einem gesteuerten MOS-FET (83) welcher über eine Steuereinheit (84) angesteuert wird. Das Ausgangssignal wird über einen Kondensator (85) geglättet.

Fig. 7 zeigt beispielhaft eine weitere erfindungsgemäße Anordnung mit einem Schaltregler am Ausgang der sekundärseitigen Beschaltung. Hierbei erfolgt die Signalauskopplung wieder mittels einer Sekundärinduktivität (22) welche über die dieser parallel geschaltete Kapazität (32) zu einem Parallelresonanzkreis ergänzt wird. Das Signal am Parallelresonanzkreis wird über eine Schottky-Diode (80) gleichgerichtet und über einen ersten Filterkondensator (81) gefiltert. Die anschließende Regelung und Umsetzung in andere Spannungen erfolgt mittels eines getakteten Schaltreglers (83).

Fig. 8 zeigt eine beispielhafte Anordnung mit zusätzlicher Signalübertragung im Falle eines geschlossenen Eisen- bzw. Ferritkernes. Dabei ist der magnetsiche Kern der Primärseite (51) mit dem Kern der Sekundärseite (52) verkoppelt. Der magnetische Fluß zur Energieübertragung nach Anspruch ist durch die Linien (90) dargestellt. Die Linien (91) zeigen den magnetischen Fluß zur Übertragung zusätzlicher Signale. Hier geht das Magnetfeld teilweise durch den Kern, teilweise aber auch durch die Umgebung des Kernes. In der Regel ist das Streufeld vernachlässigbar, da die magnetische Feldstärke zur Übertragung zusätzlicher Informationen wesentlich geringer ist als die Feldstärke der Energieübertragung. Die Ein- und Auskopplung zur Übertragung zusätzlicher Informationen erfolgt über die Wicklungen (92) und (93).

Fig. 9 zeigt eine beispielhafte Anordnung mit zusätzlicher Signalübertragung im Falle eines mehrschenkligen Eisen- bzw. Ferritkernes Dabei ist der magnetische Kern der Primärseite (51) mit dem Kern der Sekundärseite (52) verkoppelt. Der magnetische Fluß zur Energieübertragung nach Anspruch 1 ist durch die Linien (90) dargestellt. Die Linien (91) zeigen den magnetischen Fluß zur Übertragung zusätzlicher Signale. Die Ein- und Auskopplung zur Übertragung zusätzlicher Informationen erfolgt über die Wicklungen (92) und (93). In diesem Beispiel sind diese Wicklungen als Differenzwicklungen ausgeführt, so dass sich die durch den magnetischen Fluß zur Energieübertragung (90) entstehenden Spannungen aufheben.

## Patentansprüche

1. Anordnung zu kontaktlosen Ubertragung elektrischer Signale beziehungsweise Energie von mindestens einem Sender (1) zu mehreren Empfängern (E1, E2, E3, E4), wobei jeder Sender eine Wechselspannungs- bzw. Stromquelle sowie mehrere von dieser gespeiste Koppelelemente (2,3) enthält, welche durch mindestens eine Kapazität (12) zu resonanzfähigen Elementen ergänzt werden und weiterhin ein Steuerelement vorhanden ist, welches die Wechselspannungs- bzw. Stromquelle derart steuert, dass diese auf einer Resonanzfrequenz der resonanzfähigen Elementen arbeitet
**dadurch gekennzeichnet, dass**
die Koppelelemente als induktive Koppelelemente ausgeführt sind, welche parallel geschaltet sind.

2. Anordnung nach Anspruch 1
**dadurch gekennzeichnet, dass** die induktiven Koppelelemente derart gestaltet sind, dass deren parasitäre Kapazität zumindest einen wesentlichen Anteil zur Resonanzkapazität beiträgt.

3. Anordnung nach Anspruch 1 oder 2
**dadurch gekennzeichnet, dass** die induktiven Koppelelemente zu Serienresonanzkreisen ergänzt werden und das Steuerelement derart ausgebildet ist, dass die Wechselspannungs- bzw. Stromquelle auf einer Parallelresonanzfrequenz betrieben wird.

4. Anordnung nach einem der Ansprüche 1 bis 3
**dadurch gekennzeichnet, dass** die induktiven Koppelelemente zu Parallelresonanzkreisen ergänzt werden und das Steuerelement derart ausgebildet ist, dass Wechselspannungs- bzw. Stromquelle auf einer Serienresonanzfrequenz betrieben wird.

5. Anordnung nach einem der Ansprüche 1 bis 4
**dadurch gekennzeichnet, dass** zusätzliche kapazitive Elemente zur Übertragung von zusätzlichen Signalen vorhanden sind.

6. Anordnung nach einem der Ansprüche 1 bis 5,
**dadurch gekennzeichnet, dass** zusätzlichen Signale über einen weiteren, nicht zur Energieübertragung verwendeten magnetischen Pfad wie die magnetische Außenfläche oder weitere Schenkel bei mehrschenkligen Kernen übertragen werden.

7. Anordnung nach einem der Ansprüche 1 bis 6,
**dadurch gekennzeichnet, dass** mindestens eine zusätzliche Modulationseinheit bzw. Demodulationseinheit zur Übertragung von zusätzlichen Signalen in einem von der Resonanzfrequenz verschiedenen Frequenzband vorhanden ist.

8. Anordnung nach einem der Ansprüche 1 bis 7,
**dadurch gekennzeichnet, dass** die zusätzlichen kapazitiven Elemente zur Übertragung der zusätzlichen Signale im Bereich des magnetischen Feldes des induktiven Koppelelementes vorgesehen sind.

9. Anordnung nach einem der Ansprüche 1 bis 8,
**dadurch gekennzeichnet, dass** die zusätzlichen kapazitiven Koppelelemente in eine Leiterplatte integriert sind, welche gleichzeitig eine mechanische Abdeckung der induktiven Koppelelemente darstellt.

10. Anordnung nach einem der Ansprüche 1 bis 9,
**dadurch gekennzeichnet, dass** das Steuerelement derart ausgelegt ist, dass es zusammen mit der Wechselspannungs- bzw. Stromquelle und den Resonanzkreisen einen selbstschwingenden Leistungsoszillator ergibt.

11. Anordnung nach einem der Ansprüche 1 bis 11,
**dadurch gekennzeichnet, dass** das Steuerelement eine feste Frequenz für die Wechselspannungs- bzw. Stromquelle vorgibt.

12. Anordnung nach einem der Ansprüche 1 bis 11,
**dadurch gekennzeichnet, dass** mindestens einem Empfänger eine Gleichrichterschaltung mit nachgeschaltetem Linearregler zugeordnet ist.

13. Anordnung nach einem der Ansprüche 1 bis 12,
**dadurch gekennzeichnet, dass** mindestens einem Empfänger ein Synchrongleichrichter nachgeschaltet ist.

14. Anordnung nach einem der Ansprüche 1 bis 13,
**dadurch gekennzeichnet, dass** mindestens einem Empfänger ein Synchrongleichrichter, welcher durch die Steuerung der Phase den Leistungsfluss kontrolliert, zugeordnet ist.

15. Anordnung nach einem der Ansprüche 1 bis 14,
**dadurch gekennzeichnet, dass** mindestens einem Empfänger ein Schaltregler mit vorgeschaltetem Gleichrichter zugeordnet ist.

## Claims

1. Arrangement for non-contact transmission of electrical signals or energy from at least one transmitter (1) to a plurality of receivers (E1, E2, E3, E4), each transmitter comprising an a.c. voltage or current source and also a plurality of coupling elements (2, 3) which are fed thereby and are complemented with at least one capacitor (12) to form elements capable of resonating, a control element being present for controlling the a.c. voltage or current source to operate at a resonance frequency of the elements capable of resonating,
**characterized in that**
the coupling elements are designed to be inductive coupling elements which are connected in parallel.

2. Arrangement according to claim 1,
**characterized in that** the inductive coupling elements are designed so that their parasitic capacity contributes at least a substantial proportion to the resonance capacity.

3. Arrangement according to claim 1 or 2,
**characterized in that** the inductive coupling elements are complemented to form series resonance circuits, and the control element is designed so that the a.c. voltage or current source is operated at a parallel resonance frequency.

4. Arrangement according to any one of claims 1 to 3,
**characterized in that** the inductive coupling elements are complemented to form parallel resonance circuits, and the control element is designed so that the a.c. voltage or current source is operated at a series resonance frequency.

5. Arrangement according to any one of claims 1 to 4,
**characterized in that** additional capacitive elements are present for transmitting additional signals.

6. Arrangement according to any one of claims 1 to 5,
**characterized in that** additional signals are transmitted via a further magnetic path not used for energy transmission, such as a magnetic outer surface or further limbs of multi-limbed cores.

7. Arrangement according to any one of claims 1 to 6,
**characterized in that** at least one additional modulation unit or demodulation unit is present for transmitting additional signals in a frequency band different from the resonance frequency.

8. Arrangement according to any one of claims 1 to 7,
**characterized in that** the additional capacitive elements for transmitting the additional signals are provided within the range of the magnetic field of the inductive coupling element.

9. Arrangement according to any one of claims 1 to 8,
**characterized in that** the additional capacitive coupling elements are incorporated in a printed board which at the same time represents a mechanical cover for the inductive coupling elements.

10. Arrangement according to any one of claims 1 to 9,
**characterized in that** the control element is designed to form a self-oscillating power oscillator together with the a.c. voltage or current source and the resonance circuits.

11. Arrangement according to any one of claims 1 to 10,
**characterized in that** the control element sets a fixed frequency for the a.c. voltage or current source.

12. Arrangement according to any one of claims 1 to 11,
**characterized in that** a rectifier circuit followed by a linear regulator is assigned to at least one receiver.

13. Arrangement according to any one of claims 1 to 12,
**characterized in that** a synchronous rectifier is connected to follow at least one receiver.

14. Arrangement according to any one of claims 1 to 13,
**characterized in that** a synchronous rectifier which controls the power flow by controlling the phase is assigned to at least one receiver.

15. Arrangement according to any one of claims 1 to 14,
**characterized in that** a switching regulator preceded by a rectifier is assigned to at least one receiver.

## Revendications

1. Dispositif de transmission sans contact de signaux électriques ou d'énergie électrique d'au moins un émetteur (1) à plusieurs récepteurs (E1, E2, E3, E4), dans lequel chaque émetteur contient une source de tension alternative ou de courant ainsi que plusieurs éléments de couplage (2, 3) alimentés par celle-ci, lesquels sont complétés par au moins une capacité (12) en éléments résonants, et dans lequel il est également prévu un élément de commande qui commande la source de tension alternative ou de courant de manière que celle-ci fonctionne à une fréquence de résonance des éléments résonants,
**caractérisé par le fait que**
les éléments de couplage sont réalisés sous la forme d'éléments de couplage inductif qui sont montés en parallèle.

2. Dispositif selon la revendication 1,
**caractérisé par le fait que** les éléments de couplage inductif sont conçus de manière que leur capacité parasite contribue au moins pour une part essentielle à la capacité de résonance.

3. Dispositif selon la revendication 1 ou 2,
**caractérisé par le fait que** les éléments de couplage inductif sont complétés en circuits résonants série et que l'élément de commande est conçu de manière que la source de tension alternative ou de courant fonctionne à une fréquence de résonance parallèle.

4. Dispositif selon l'une des revendications 1 à 3,
**caractérisé par le fait que** les éléments de couplage inductif sont complétés en circuits résonants parallèles et que l'élément de commande est conçu de manière que la source de tension alternative ou de courant fonctionne à une fréquence de résonance série.

5. Dispositif selon l'une des revendications 1 à 4,
**caractérisé par le fait qu'**il est prévu des éléments capacitifs supplémentaires pour la transmission de signaux supplémentaires.

6. Dispositif selon l'une des revendications 1 à 5,
**caractérisé par le fait que** des signaux supplémentaires sont transmis via un autre chemin magnétique, non utilisé pour la transmission d'énergie, comme la surface extérieure magnétique ou d'autres branches dans le cas de noyaux à plusieurs branches.

7. Dispositif selon l'une des revendications 1 à 6,
**caractérisé par le fait qu'**il est prévu au moins une unité de modulation et de démodulation supplémentaire pour la transmission de signaux supplémentaires dans une bande de fréquences différente de la fréquence de résonance.

8. Dispositif selon l'une des revendications 1 à 7,
**caractérisé par le fait que** les éléments capacitifs supplémentaires pour la transmission de signaux supplémentaires sont prévus dans la zone du champ magnétique des éléments de couplage inductif

9. Dispositif selon l'une des revendications 1 à 8,
**caractérisé par le fait que** les éléments capacitifs supplémentaires sont intégrés dans une carte de circuits imprimés qui constitue en même temps une protection mécanique des éléments de couplage inductif.

10. Dispositif selon l'une des revendications 1 à 9,
**caractérisé par le fait que** l'élément de commande est conçu de manière qu'il constitue conjointement avec la source de tension alternative ou de courant et les circuits résonants un oscillateur de puissance auto-oscillant.

11. Dispositif selon l'une des revendications 1 à 10,
**caractérisé par le fait que** l'élément de commande impose une fréquence fixe pour la source de tension alternative ou de courant.

12. Dispositif selon l'une des revendications 1 à 11,
**caractérisé par le fait qu'**un circuit redresseur suivi d'un régulateur linéaire est associé à au moins un récepteur.

13. Dispositif selon l'une des revendications 1 à 12,
**caractérisé par le fait qu'**un redresseur synchrone est placé à la suite d'au moins un récepteur.

14. Dispositif selon l'une des revendications 1 à 13,
**caractérisé par le fait qu'**un redresseur synchrone, qui contrôle le flux de puissance par la commande de la phase, est associé à au moins un récepteur.

15. Dispositif selon l'une des revendications 1 à 14,
**caractérisé par le fait qu'**un régulateur à découpage avec redresseur couplé en amont est associé à au moins un récepteur.
